# EUROPÄISCHE PATENTSCHRIFT

(11) **EP 1 786 649 B1**
(45) Veröffentlichungstag und Bekanntmachung des Hinweises auf die Patenterteilung: **02.03.2011**
(21) Anmeldenummer: 05791961.5
(22) Anmeldetag: 21.09.2005
(51) Int. Cl.: B60N 2/28, B60R 22/26

(54) **GURTFÜHRUNGSELEMENT FÜR EIN KINDERSCHUTZSYSTEM**
BELT GUIDING ELEMENT FOR CHILD SAFETY SYSTEM
ELEMENT DE GUIDAGE DE CEINTURE POUR UN SYSTEME DE SECURITE POUR ENFANTS

(30) Priorität: 05.10.2004 DE 102004048997
(43) Veröffentlichungstag der Anmeldung: 23.05.2007
(73) Patentinhaber: Takata-Petri AG, 63743 Aschaffenburg (DE)
(72) Erfinder: NETT, Reiner, 63739 Aschaffenburg (DE); BOLL, Rüdiger, 63856 Bessenbach (DE)
(74) Vertreter: Baumgärtel, Gunnar
(86) Internationale Anmeldenummer: PCT/DE2005/001692
(87) Internationale Veröffentlichungsnummer: WO 2006/037289

(56) Entgegenhaltungen:
- AU-A4- 2004 100 332
- DE-U1- 29 923 426
- FR-A- 2 738 541
- US-A1- 2002 011 726

## Beschreibung

Die Erfindung bezieht sich auf ein Gurtführungselement für ein Kinderschutzsystem - fachsprachlich KSS-System genannt - bzw. für einen Kindersitz, mit dem sich ein Kind in einem Fahrzeug durch einen Sicherheitsgurt, beispielsweise einen 3-Punkt-Sicherheitsgurt, des Fahrzeuges sichern lässt. Ein solches Kinderschutzsystem ist bekanntermaßen mit zumindest einem Gurtführungselement ausgerüstet, mit dem der Sicherheitsgurt im Bereich der Schulter des zu sichernden Kindes optimal positioniert wird. Um den Sicherheitsgurt aufnehmen zu können, muss ein solches Gurtführungselement eine Zugangsöffnung aufweisen, durch die der Sicherheitsgurt "eingefädelt" wird. Aus sicherheitstechnischer Sicht sollte eine solche Zugangsöffnung möglichst klein sein, um ein Herausgleiten des Sicherheitsgurtes aus dem Gurtführungselement unter allen Umständen zu verhindern. Unter Handhabungsgesichtspunkten sollte die Zugangsöffnung jedoch möglichst groß sein, um ein einfaches Ein- und Ausfädeln des Sicherheitsgurtes zu ermöglichen.

Aus der FR-A-2 738 541 ist ein Gurtführungselement mit einem Aufnahmeschlitz zur Aufnahme eines fahrzeugseitigen Sicherheitsgurtes bekannt. Das Gurtführungselement weist ein Verschlusselement auf, das geöffnet und geschlossen werden kann. In seiner geöffneten Stellung ermöglicht das Verschlusselement ein Einführen des Sicherheitsgurtes in den Aufnahmeschlitz oder ein Entfernen eines zuvor eingeführten Sicherheitsgurtes aus dem Aufnahmeschlitz. In der geschlossenen Endstellung wird ein Einführen oder Entnehmen des Sicherheitsgurtes verhindert. Das Verschlusselement wird durch einen schwenkbaren Verschlusshebel gebildet, der um eine beabstandet zum Aufnahmeschlitz angeordnete Schwenkachse schwenkbar ist.

Der Erfindung liegt die Aufgabe zugrunde, ein Gurtführungselement für ein Kinderschutzsystem, insbesondere für einen Kindersitz, anzugeben, das ein hohes Maß an Sicherheit und gleichzeitig einen besonders großen Bedienungskomfort beim Ein- und Ausfädeln des Sicherheitsgurtes, also beim Anlegen des Sicherheitsgurtes am zu sichernden Kind, ermöglicht.

Diese Aufgabe wird erfindungsgemäß durch ein Gurtführungselement mit den Merkmalen gemäß Patentanspruch 1 gelöst. Vorteilhafte Ausgestaltungen des erfindungsgemäßen Gurtführungselementes sind in Unteransprüchen angegeben.

Danach ist ein Gurtführungselement für ein Kinderschutzsystem, insbesondere für einen Kindersitz, vorgesehen, bei dem ein Verschlusselement des Gurtführungselements in seiner geöffneten Stellung ein Einführen des Sicherheitsgurtes in einen Aufnahmeschlitz des Gurtführungselements oder ein Entfernen eines zuvor eingeführten Sicherheitsgurtes aus dem Aufnahmeschlitz ermöglicht und in seiner geschlossenen Endstellung ein Einführen oder Entnehmen des Sicherheitsgurtes verhindert. Dieses Verschlusselement ist durch einen schwenkbaren Verschlusshebel gebildet, der um eine beabstandet zum Aufnahmeschlitz angeordnete Schwenkachse schwenkbar ist. Eine besonders große Zugangsöffnung zum Ein- und Ausfädeln des Sicherheitsgurtes wird dadurch erreicht, dass der Aufnahmeschlitz zumindest abschnittsweise kreisförmig - also auf einer "gedachten Kreisbahn - verläuft und die Schwenkachse des Verschlusshebels den Kreismittelpunkt der Kreisbahn des Aufnahmeschlitzes bildet.

Ein wesentlicher Vorteil des erfindungsgemäßen Gurtführungselements ist darin zu sehen, dass dieses ein besonders hohes Maß an Sicherheit für das zu sichernde Kind gewährleistet; denn der schwenkbare Verschlusshebel weist eine geschlossene Endstellung auf, in der ungewolltes Herausgleiten des angelegten Sicherheitsgurtes zuverlässig verhindert wird.

Ein weiterer wesentlicher Vorteil des erfindungsgemäßen Gurtführungselements liegt in seinem sehr großen Bedienungskomfort, da ein sehr einfaches Ein- und Ausfädeln des Sicherheitsgurtes in bzw. aus dem Aufnahmeschlitz ohne weiteres ermöglicht wird, da der Verschlusshebel eine geöffnete Stellung bietet, die einen einfachen Zugang zum Aufnahmeschlitz gewährleistet.

Der Verschlusshebel ist vorzugsweise derart angeordnet, dass ein dem Aufnahmeschlitz zugewandtes Ende des Verschlusshebels beim Öffnen oder Schließen des Verschlusshebels einen Abschnitt einer "Verschlusshebelkreisbahn" beschreibt, die konzentrisch zum Aufnahmeschlitz verläuft ist. Durch ein "kreisförmiges" Verschwenken des Verschlusshebels "parallel" bzw. konzentrisch zu Aufnahmeschlitz wird erreicht, dass die Zugangsöffnung besonders groß und ein Einfädeln des Gurtbandes auch mit nur einer Hand, also "einhändig", möglich wird.

Eine vergleichbar gute Zugänglichkeit zum Aufnahmeschlitz lässt sich erreichen, wenn der Verschlusshebel in jeder Schwenkposition jeweils senkrecht zu einer gedachten Tangente steht, die an der dem Ende des Verschlusshebels jeweils am nächsten liegenden Stelle des vorzugsweise zumindest annähernd kreisförmig verlaufenden Aufnahmeschlitzes gebildet wird.

Um eine Positionierung des Sicherheitsgurtes im Aufnahmeschlitz in einer möglichst definierten Lage sicherzustellen, steht mit dem dem Aufnahmeschlitz zugewandten Ende des Verschlusshebels vorzugsweise ein Positionierglied in Verbindung, dessen äußere Kontur dem Abschnitt der vom Verschlusshebel überstrichenen Kreisbahn beim Öffnen bzw. Schließen des Verschlusshebels entspricht und das in der geschlossenen Endstellung des Verschlusshebels den Sicherheitsgurt in dem Aufnahmeschlitz zurückhält und diesen positioniert.

Bevorzugt weist ein Gehäuse des Gurtführungselements eine Aufnahmeöffnung zur vollständigen Aufnahme des Positionierelements auf. In diese Aufnahmeöffnung wird das Positionierelement in der geöffneten Stellung des Verschlusshebels vorzugsweise vollständig eingeführt.

Darüber hinaus wird es als vorteilhaft angesehen, wenn an dem Verschlusshebel ein Abdeckelement, insbesondere eine Abdeckplatte, derart angeordnet ist, dass ein Einführen von Körperteilen, beispielsweise eines Fingers des zu sichernden Kindes, oder von sonstigen Gegenständen in den Raum zwischen dem Verschlusshebel und dem die Schwenkachse des Verschlusshebels haltenden Gehäuse verhindert wird. Ein solches Abdeckelement gewährleistet also zum einen einen Einklemmschutz für das zu sichernde Kind und stellt zum anderen sicher, dass keine Gegenstände in den Schwenkbereich des Verschlusshebels eingebracht werden können, die ein Blockieren des Verschlusshebels bewirken könnten und eine Entnahme des Sicherheitsgurtes verhindern könnten.

Vorzugsweise weist das Gehäuse des Gurtführungselements eine Aufnahmeöffnung - nachfolgend weitere Aufnahmeöffnung genannt - zur bevorzugt vollständigen Aufnahme des Abdeckelements auf; in diese weitere Aufnahmeöffnung wird das Abdeckelement in der geöffneten Stellung des Verschlusshebels eingeführt.

Das Positionierglied und das Abdeckelement können mit dem Verschlusshebel beispielsweise einteilig verbunden sein.

Um Material und Gewicht einzusparen, kann zwischen dem Positionierglied und dem Abdeckelement beispielsweise ein Trennschlitz vorhanden sein. Dabei wird der Trennschlitz vorzugsweise derart bemessen, dass ein Einführen von Körperteilen des zu sichernden Kindes oder von sonstigen "üblichen" Gegenständen in den Trennschlitz verhindert wird.

Um sicherzustellen, dass das Gurtführungselement im Fahrgebrauch stets verschlossen ist, ist dieses vorzugsweise derart ausgestaltet, dass es selbsttätig komplett verschließt. Ein solcher selbsttätiger Verschluss wird bevorzugt durch ein Federelement bewirkt, das mit dem Verschlusshebel zusammenwirkt und auf diesen stets eine Kraft in Richtung geschlossene Endstellung des Verschlusshebels ausübt.

Um eine besonders gute Zugänglichkeit des Aufnahmeschlitzes zu ermöglichen, ist der Verschlusshebel vorzugsweise derart angeordnet, dass er in seinem geöffneten Zustand zumindest ein Fünftel der Größe des Aufnahmeschlitzes, vorzugsweise ein Drittel oder die Hälfte der Aufnahmeschlitzgröße, freigibt.

Um ein sicheres Arretieren des Verschlusshebels in seiner geschlossen Endstellung sicherzustellen, wird das Ende des Verschlusshebels vorzugsweise mit einem Rastelement versehen, das mit einer Rastvorrichtung an dem das Schwenklager des Verschlusshebels haltenden Gehäuse zusammenwirkt. Das Rastelement des Verschlusshebels sowie die Rastvorrichtung des Gehäuses sind dabei passend zueinander derart ausgestaltet, dass die Rastvorrichtung den Verschlusshebel in dessen geschlossener Endstellung verrastet und erst bei Überschreiten einer vorgegebenen Auslenkkraft freigibt. Die Auslenkkraft kann beispielsweise derart bemessen sein, dass sie von den zu sichernden Kindern üblicherweise nicht aufgebracht werden kann, so dass das Öffnen des Verschlusshebels nur von Erwachsenen durchgeführt werden kann. Die entsprechend geeignete Auslenkkraft kann beispielsweise durch Versuchsreihen ermittelt werden.

Eine möglichst kompakte und raumsparende Form weist das Gurtführungselement beispielsweise dann auf, wenn das Gehäuse des Gurtführungselements in der Draufsicht zumindest annähernd die Form eines Kreissegments aufweist, dessen Segmentgröße dem ungefähr Zweifachen des maximal möglichen Schwenkwinkels des Verschlusshebels entspricht.

Bevorzugt weist das Gehäuse eine verrundete Gleitfläche auf. Der schwenkbare Verschlusshebel wird vorzugsweise zum Öffnen nach innen geschwenkt, wobei die Öffnung des Aufnahmeschlitzes nach oben ausgerichtet ist.

Außerdem ist das Gehäuse vorteilhaft mit einem Hakenbereich ausgestattet. Dieser Hakenbereich ist bevorzugt derart ausgeformt, dass der Sicherheitsgurt auch im Unfallfall in Position gehalten wird.

Die Erfindung bezieht sich darüber hinaus auf ein Kinderschutzsystem, insbesondere einen Kindersitz, das mit einem Gurtführungselement ausgestattet ist.

Um bei einem solchen Kinderschutzsystem eine möglichst große Sicherheit bezüglich der Positionierung des Sicherheitsgurtes zu erreichen und um andererseits einen besonders hohen Komfort beim Ein- und Ausfädeln des Sicherheitsgurtes zu ermöglichen, weist dieses erfindungsgemäß ein Gurtführungselement auf, wie dies oben eingehend beschrieben ist.

Das Gurtführungselement kann beispielsweise unmittelbar am Kindersitz befestigt sein. Zwecks Positionierung des Gurtführungselements im Schulterbereich des zu sichernden Kindes ist dieses bevorzugt in Schulterhöhe des Kindes angeordnet.

Um eine optimale Position des Sicherheitsgurtes auch bei unterschiedlich großen Kindern zu ermöglichen, ist die Position des Gurtführungselements am Kindersitz vorzugsweise verstellbar.

Zur Erläuterung der Erfindung zeigen:
- Figur 1: ein Ausführungsbeispiel für einen erfindungsgemäßen Kindersitz als Kinderschutzsystem mit einem Ausführungsbeispiel für ein erfindungsgemäßes Gurtführungselement,
- Figur 2: das Gurtführungselement gemäß Figur 1 in der geschlossenen Stellung,
- Figur 3: das Gurtführungselement gemäß Figuren 1 und 2 in seiner geöffneten Stellung und
- Figuren 4 und 5: ein zweites Ausführungsbeispiel für ein erfindungsgemäßes Gurtführungselement.

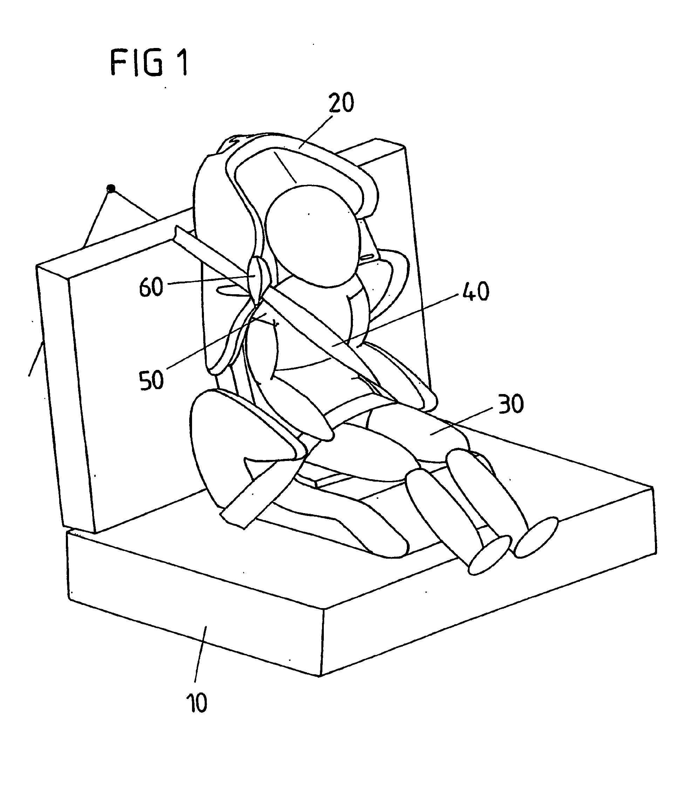

In der Figur 1 erkennt man einen Fahrzeugsitz 10, bei dem es sich um eine hintere Fahrzeugsitzbank oder auch um einen vorderen Fahrzeugsitz, also den Beifahrersitz, handeln kann. Auf dem Fahrzeugsitz 10 ist ein Kindersitz 20 befestigt, der ein Kinderschutzsystem bildet. Auf dem Kindersitz 20 befindet sich ein Kind 30, das mit einem Sicherheitsgurt 40 des Kraftfahrzeugs angeschnallt ist. Bei dem Sicherheitsgurt 40 handelt es sich um einen 3-Punkt-Sicherheitsgurt.

Wie sich in der Figur 1 erkennen lässt, ist im Bereich der Schulter 50 des Kindes 30 ein Gurtführungselement 60 am Kindersitz 20 befestigt. Durch das Gurtführungselement 60 ist der Sicherheitsgurt 40 hindurchgeführt, so dass das Gurtführungselement 60 eine Positionierung des Sicherheitsgurtes 40 im Bereich der Schulter 50 des Kindes 30 bewirkt.

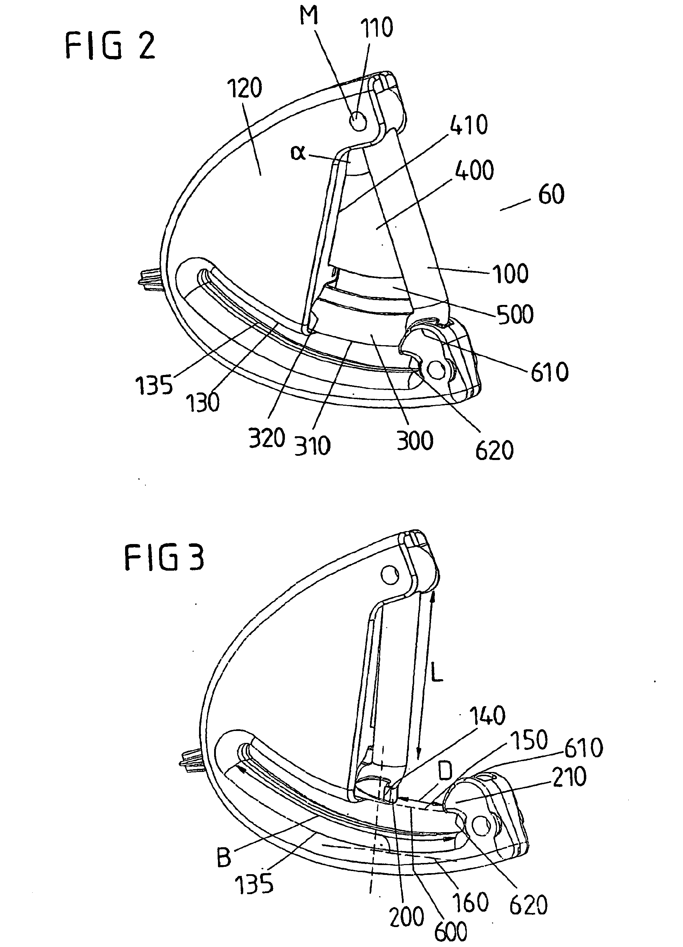

In der Figur 2 ist das Gurtführungselement 60 gemäß Figur 1 im Detail dargestellt. Man erkennt in der Figur 2, dass das Gurtführungselement 60 einen verschwenkbaren Verschlusshebel 100 aufweist, der um eine Schwenkachse 110 schwenkbar gelagert ist. Die Schwenkachse 110 bzw. das Schwenklager wird von einem Gehäuse 120 des Gurtführungselements 60 gehalten.

Durch den verschwenkbaren Verschlusshebel 100 wird der Zugang zu einem Aufnahmeschlitz 130 des Gurtführungselementes 60 versperrt. Der Aufnahmeschlitz 130 verläuft kreisförmig und bildet somit den Abschnitt einer Kreisbahn 135; der Aufnahmeschlitz 130 dient zur Aufnahme des Sicherheitsgurtes 40 und damit zur Positionierung des Sicherheitsgurtes im Schulterbereich des Kindes 30.

Durch Verschwenken des Verschlusshebels 100 wird der Aufnahmeschlitz 130 zugänglich, so dass der Sicherheitsgurt 40 in den Aufnahmeschlitz 130 eingeführt oder aus diesem entnommen werden kann. Das Wegschwenken des Verschlusshebels 100 ist in der Figur 3 erkennbar; denn die Figur 3 zeigt den Verschlusshebel 100 in seiner geöffneten Stellung.

In den Figuren 2 und 3 lässt sich außerdem erkennen, dass die Schwenkachse 110 des Verschlusshebels 100 derart angeordnet ist, dass diese den Kreismittelpunkt M des Kreisbahnabschnitts 135 des Aufnahmeschlitzes 130 bildet. Ein dem Aufnahmeschlitz 130 zugewandtes Ende 140 des Verschlusshebels 100 beschreibt somit beim Öffnen oder Schließen des Verschlusshebels einen Abschnitt einer Kreisbahn 150, die konzentrisch zum zumindest abschnittsweise kreisförmig verlaufenden Aufnahmeschlitz 130 und damit konzentrisch zum Kreisbahnabschnitt 135 verläuft. Aufgrund dieser Anordnung der Schwenkachse wird außerdem bewirkt, dass der Verschlusshebel 100 in jeder Schwenkposition jeweils senkrecht zu einer gedachten Tangente 160 steht, die sich an der dem Ende 140 des Verschlusshebels 100 jeweils am nächsten liegenden Stelle der Kreisbahn 135 des Aufnahmeschlitzes 130 konstruieren lässt.

Die Länge L des Verschlusshebels 140 ist vorzugsweise derart dimensioniert, dass der Öffnungsabstand D zwischen dem Ende 140 des Verschlusshebels 100 in dessen geöffneter Position relativ zu dessen geschlossener Position zumindest ein Fünftel, vorzugsweise ein Drittel bis die Hälfte, der Gesamtbreite B des Aufnahmeschlitzes 130 beträgt.

Um sicherzustellen, dass sich der Verschlusshebel 100 stets in seiner geschlossenen Position befindet, sofern der Sicherheitsgurt 40 nicht ein- oder ausgefädelt werden soll, steht dieser mit einem in den Figuren 2 und 3 nicht dargestellten Federelement in Verbindung, das beispielsweise im Gehäuse 120 untergebracht sein kann. Mit diesem Federelement wird der Verschlusshebel 100 stets in die in der Figur 2 dargestellte geschlossene Position geschwenkt.

Um darüber hinaus sicherzustellen, dass der Verschlusshebel 100 in seiner geschlossenen Endstellung sicher verbleibt, sofern er nicht gewollt und absichtlich weggeschwenkt werden soll, ist das Ende des Verschlusshebels 140 mit einem Rastelement 200 ausgestattet, das mit einer Rastvorrichtung 210 des Gehäuses 120 zusammenwirkt. Sobald der Verschlusshebel 100 in die in der Figur 2 dargestellte Position gebracht wird, verrastet das Rastelement 200 mit der Rastvorrichtung 210, so dass ein Verschwenken des Verschlusshebels 100 nur dann möglich ist, wenn eine vorgegebene Mindestauslenkkraft überschritten wird. Die Mindestaustenkkraft kann beispielsweise derart bemessen sein, dass diese von kleinen Kindern üblicherweise nicht ohne weiteres aufgebracht werden kann; dies gewährleistet, dass ein Entfädeln des Sicherheitsgurtes 40 durch das zu sichernde Kind nicht ohne weiteres allein durchgeführt werden kann.

In der Figur 2 ist darüber hinaus erkennbar, dass an dem Verschlusshebel 100 ein Positionierglied 300 beispielsweise einstückig angebracht ist. Das Positionierglied 300 ist dabei derart am Verschlusshebel 100 befestigt, dass dessen äußere Kontur 310 im Wesentlichen dem Verlauf des Aufnahmeschlitzes 130 entspricht. Dadurch wird gewährleistet, dass der Sicherheitsgurt 40 nach einem Einfädeln in den Aufnahmeschlitz 130 sicher positioniert bleibt und sich beispielsweise nicht verdrehen kann, sobald der Verschlusshebel 100 seine in der Figur 2 gezeigte Verschlussposition erreicht.

In dem Gehäuse 120 ist für das Positionierglied 300 eine Aufnahmeöffnung 320 vorgesehen, die das Positionierglied 300 bei einem Verschwenken des Verschlusshebels 100 in die in der Figur 3 dargestellte geöffnete Stellung vollständig aufnimmt.

In der Figur 2 ist darüber hinaus eine Abdeckplatte 400 als Abdeckelement erkennbar, die ebenfalls mit dem Verschlusshebel 100 beispielsweise einstückig verbunden ist. Die Funktion der Abdeckplatte besteht darin, ein Einführen von Gegenständen oder beispielsweise von Fingern des zu sichernden Kindes in den Schwenkbereich des Verschlusshebels 100 zu verhindern. Das Gehäuse 120 weist für die Abdeckplatte 400 eine weitere Aufnahmeöffnung 410 auf, die ein vollständiges Einführen der Abdeckplatte 400 beim Schwenken des Verschlusshebels 100 in die geöffnete Stellung erlaubt.

Zwischen der Abdeckplatte 400 und dem Positionierglied 300 kann beispielsweise ein Trennschlitz 500 angeordnet sein, jedoch ist ein solcher Trennschlitz 500 nicht unbedingt notwendig.

Wie sich in den Figuren 2 und 3 erkennen lässt, ist das Gehäuse 120 in der Draufsicht zumindest annähernd wie ein Kreissegment ausgeformt. Die Größe des Kreissegments entspricht dabei annähernd dem Zweifachen des Schwenkwinkels α, den der Verschlusshebel 100 beim Schwenken überstreicht.

Zusammenfassend ermöglicht der Aufbau des Gurtführungselements 60 eine maximale Größe der Öffnung 600 (vgl. Öffnungsabstand D in Figur 3) und damit einen besonders einfachen Zugang zum Aufnahmeschlitz 130 bei gleichzeitig sehr kompakter Bauweise des Gurtführungselements, so dass der Sicherheitsgurt 40 leicht ein- und ausgefädelt werden kann.

Durch die geometrische Ausführung des Gehäuses 120, insbesondere durch die verrundete Gleitfläche 610 des Gehäuses 120, sowie durch die Anordnung und die Öffnungsrichtung des schwenkbaren Verschlusshebels 100 - der schwenkbare Verschlusshebel 100 wird zum Öffnen nach innen (ins Gurtführungselement hinein) geschwenkt - wird erreicht, dass der Sicherheitsgurt 40 bei Anlegen auf die Gleitfläche 610 quasi von alleine durch die Öffnung 600 in den Aufnahmeschlitz 130 und somit in das Gurtführungselement 60 gleitet. Hierbei öffnet die Gurtkante des Sicherheitsgurt 40 den schwenkbaren Verschlusshebel 100. Die Hand hält hierbei nur das entsprechende Gurtsegment des Sicherheitsgurts 40. Ein direktes Anfassen und Betätigen des Gurtführungselements 60 oder des Verschlusshebel 100 ist nicht notwendig. Das Gurtführungselement 60 gemäß den Figuren 1 bis 3 führt also zu einer (fast) automatischen Gurtpositionierung.

Außerdem, und dies ist ein weiterer Vorteil des Gurtführungselements 60 gemäß den Figuren 1 bis 3, ist die Öffnung 600 des Aufnahmeschlitzes 130 nach oben ausgerichtet, so dass die im Crashfall auftretenden Gurtkräfte den Verschluss nicht belasten können. Der Aufnahmeschlitz 130 liegt also - nach Montage am Fahrzeugsitz - vorzugsweise in der Ebene, die durch Fahrzeuglängsrichtung und die Fahrzeugquerrichtung (x- und y-Fahrzeugrichtungen) aufgespannt wird.

Derjenige Bereich, der im Crashfall stark belastet wird, ist außerdem derart hakenförmig (vgl. Hakenbereich 620) ausgeformt, dass der Gurt immer - also auch im Unfallfall - in Position gehalten wird. Der Hakenbereich 620 ist vorzugsweise seitlich bzw. quer zur Fahrtrichtung angeordnet.

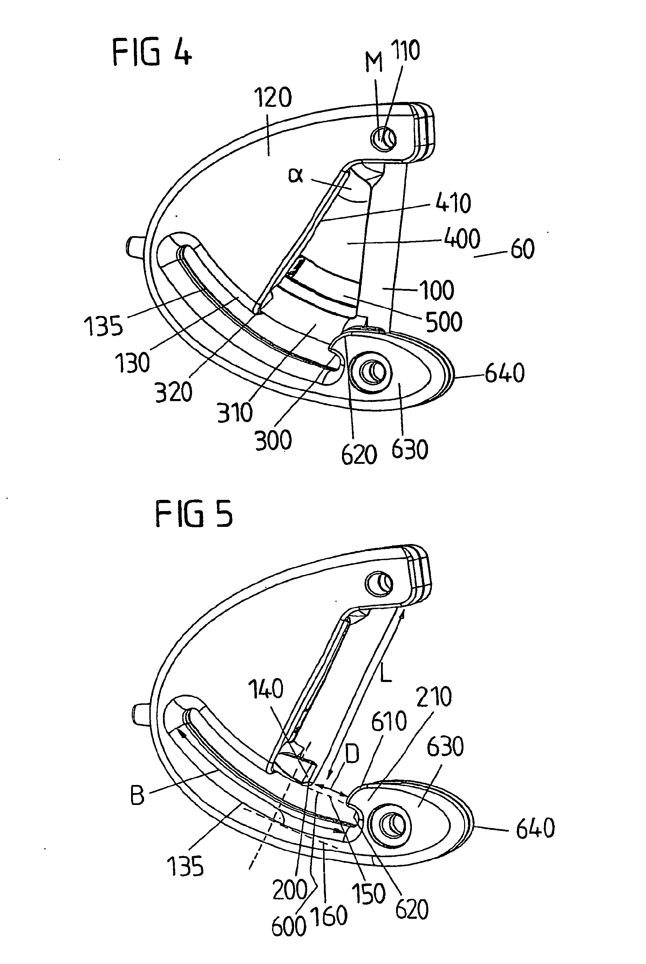

In den Figuren 4 und 5 ist ein weiteres Ausführungsbeispiel für das Gurtführungselement 60 gemäß Figur 1 dargestellt. Dieses zweite Ausführungsbeispiel unterscheidet sich von dem ersten Ausführungsbeispiel in der Ausgestaltung der Gleitfläche 610: Bei dem zweiten Ausführungsbeispiel gemäß den Figuren 4 und 5 ist die Gleitfläche 610 im vorderen Bereich 630 komplett verrundet und weist - von der Seite aus betrachtet - vorzugsweise eine ovale bzw. elliptisch ausgeformte Spitze 640 auf.

### Bezugszeichenliste

- 10: Fahrzeugsitz
- 20: Kindersitz
- 30: Kind
- 40: Sicherheitsgurt
- 50: Schulter
- 60: Gurtführungselement
- 100: schwenkbarer Verschlusshebel
- 110: Schwenkachse
- 120: Gehäuse
- 130: Aufnahmeschlitz
- 135: Kreisbahn des Aufnahmeschlitzes
- 140: Ende des Verschlusshebels
- 150: Kreisbahn
- 160: gedachte Tangente
- 200: Rastelement
- 210: Rastvorrichtung
- 300: Positionierglied
- 310: äußere Kontur des Positionierglieds
- 320: Aufnahmeöffnung für Positionierglied
- 400: Abdeckplatte
- 410: weitere Aufnahmeöffnung
- 500: Trennschlitz
- 600: Öffnung
- 610: Gleitfläche
- 620: Hakenbereich
- 630: Vorderbereich

## Patentansprüche

1. Gurtführungselement für ein Kinderschutzsystem, insbesondere für einen Kindersitz (20),
- mit einem Aufnahmeschlitz (130) zur Aufnahme eines fahrzeugseitigen Sicherheitsgurtes (40), insbesondere eines fahrzeugseitigen 3-Punkt-Gurtes, und
- mit einem Verschlusselement (100), das geöffnet und geschlossen werden kann,
- wobei das Verschlusselement (100) in seiner geöffneten Stellung ein Einführen des Sicherheitsgurtes (40) in den Aufnahmeschlitz (130) oder ein Entfernen eines zuvor eingeführten Sicherheitsgurtes (40) aus dem Aufnahmeschlitz (130) ermöglicht und in seiner geschlossenen Endstellung ein Einführen oder Entnehmen des Sicherheitsgurtes (40) verhindert,
- wobei das Verschlusselement (100) durch einen schwenkbaren Verschlusshebel gebildet ist, der um eine beabstandet zum Aufnahmeschlitz (130) angeordnete Schwenkachse (110) schwenkbar ist, und
- wobei der Aufnahmeschlitz (130) zumindest abschnittsweise kreisförmig verläuft und die Schwenkachse (110) des Verschlusshebels (100) den Kreismittelpunkt (M) der Kreisbahn (135) des Aufnahmeschlitzes (130) bildet.

2. Gurtführungselement nach Anspruch 1, **dadurch gekennzeichnet, dass** ein dem Aufnahmeschlitz (130) zugewandtes Ende (140) des Verschlusshebels (100) beim Öffnen oder Schließen des Verschlusshebels (100) einen Abschnitt einer Verschlusshebelkreisbahn (150) beschreibt, die zumindest abschnittsweise konzentrisch zum Aufnahmeschlitz (130) verläuft.

3. Gurtführungselement nach einem der voranstehenden Ansprüche, **dadurch gekennzeichnet, dass** der Verschlusshebel (100) in zumindest einer Schwenkposition, vorzugsweise in jeder Schwenkposition, jeweils senkrecht zu einer gedachten Tangente (160) steht, die an der dem Ende (140) des Verschlusshebels (100) am nächsten liegenden Stelle des Aufnahmeschlitzes (130) an dessen Verlauf (135) gebildet wird.

4. Gurtführungselement nach einem der voranstehenden Ansprüche, **dadurch gekennzeichnet, dass** mit dem dem Aufnahmeschlitz (130) zugewandten Ende (140) des Verschlusshebels (100) ein Positionierglied (300) in Verbindung steht, dessen äußere Kontur (310) dem Abschnitt der vom Verschlusshebel (100) beim Verschwenken überstrichenen Kreisbahn (150) entspricht und das in der geschlossenen Endstellung des Verschlusshebels den Sicherheitsgurt (40) in dem Aufnahmeschlitz (130) zurückhält.

5. Gurtführungselement nach Anspruch 4, **dadurch gekennzeichnet, dass** ein Gehäuse (120) des Gurtführungselements (60) eine Aufnahmeöffnung (320) zur Aufnahme des Positionierglieds (300) aufweist und dass das Positionierglied (300) in der geöffneten Stellung des Verschlusshebels (100) in diese Aufnahmeöffnung (320) zumindest teilweise eingeführt ist.

6. Gurtführungselement nach Ansprüchs, **dadurch gekennzeichnet, dass** an dem Verschlusshebel (100) ein Abdeckelement (400), insbesondere eine Abdeckplatte, derart angeordnet ist, dass ein Einführen von Körperteilen zwischen den Verschlusshebel (100) und das die Schwenkachse (110) des Verschlusshebels (100) haltenden Gehäuses (120) verhindert wird.

7. Gurtführungselement nach Anspruch 6, **dadurch gekennzeichnet, dass** das Gehäuse (120) eine Aufnahmeöffnung (410) zur insbesondere vollständigen Aufnahme des Abdeckelements (400) aufweist und dass das Abdeckelement (400) in der geöffneten Stellung des Verschlusshebels (100) in diese Aufnahmeöffnung (410) zumindest teilweise eingeführt ist.

8. Gurtführungselement nach Anspruch 6 oder 7, **dadurch gekennzeichnet, dass** das Positionierglied (300) und das Abdeckelement (400) mit dem Verschlusshebel (100) einteilig verbunden sind.

9. Gurtführungselement nach einem der Ansprüche 6 bis 8, **dadurch gekennzeichnet, dass** das Positionierglied (300) und das Abdeckelement (400) durch einen Trennschlitz (500) voneinander getrennt sind.

10. Gurtführungselement nach Anspruch 9, **dadurch gekennzeichnet, dass** der Trennschlitz (500) derart bemessen ist, dass ein Einführen von Körperteilen in den Trennschlitz verhindert wird.

11. Gurtführungselement nach einem der voranstehenden Ansprüche, **dadurch gekennzeichnet, dass** ein Federelement mit dem Verschlusshebel (100) zusammenwirkt und auf diesen stets eine Kraft in Richtung geschlossene Endstellung ausübt.

12. Gurtführungselement nach einem der voranstehenden Ansprüche, **dadurch gekennzeichnet, dass** der Verschlusshebel (100) derart angeordnet ist, dass er in seinem geöffneten Zustand zumindest ein Fünftel, vorzugsweise zumindest ein Drittel, des Aufnahmeschlitzes (130) freigibt.

13. Gurtführungselement nach einem der Ansprüche 5 bis 10, **dadurch gekennzeichnet, dass** das Ende (140) des Verschlusshebels (100) mit einem Rastelement (200) versehen ist, das mit einer Rastvorrichtung (210) des das Schwenklager (110) haltenden Gehäuse (120) zusammenwirkt, wobei die Rastvorrichtung (210) derart ausgestaltet ist, dass sie den Verschlusshebel (100) in dessen geschlossener Endstellung verrastet und erst bei Überschreiten einer vorgegebenen Mindestauslenkkraft freigibt.

14. Gurtführungselement nach einem der Ansprüche 5 bis 10 oder 13, **dadurch gekennzeichnet, dass** das Gehäuse (120) des Gurtführungselements (60) in der Draufsicht zumindest annähernd die Form eines Kreissegments aufweist, dessen Segmentwinkelgröße zumindest dem Zweifachen des Schwenkwinkel (α) des Verschlusshebels (100) entspricht.

15. Gurtfühnrngselement nach einem der voranstehenden Ansprüche 5 bis 10,13 oder 14, **dadurch gekennzeichnet, dass** das Gehäuse (120) eine verrundete Gleitfläche (610) aufweist.

16. Gurtführungselement nach einem der voranstehenden Ansprüche, **dadurch gekennzeichnet; dass** der schwenkbare Verschlusshebel (100) zum Öffnen nach innen geschwenkt wird.

17. Gurtfuhrungsetement nach einem der voranstehenden Ansprüche, **dadurch gekennzeichnet, dass** die Öffnung (600) des Aufnahmeschlitzes (130) nach oben ausgerichtet ist.

18. Gurtfühnrngselement nach einem der voranstehenden Ansprüche 5 bis 10 oder 13 bis 15, **dadurch gekennzeichnet dass** das Gehäuse (120) einen Hakenbereich (620) aufweist.

19. Gurtführungselement nach Anspruch 18, **dadurch gekennzeichnet, dass** der Hakenbereich (620) derart hakenförmig ausgeformt ist, dass der Sicherheitsgurt (40) auch im Unfallfall in Position gehalten wird.

20. Kindersitz mit einem Gurtführungselement (60) nach einem der vorangehenden Ansprüche.

21. Kindersitz nach Anspruch 20, **dadurch gekennzeichnet, dass** das Gurtführungselement (60) an dem Kindersitz befestigt ist.

22. Kindersitz nach Anspruch 21, **dadurch gekennzeichnet, dass** das Gurtführungselement (60) in Schulterhöhe (50) des zu sichernden Kindes (30) angeordnet ist.

23. Kindersitz nach einem der voranstehenden Ansprüche 20 bis 22, **dadurch gekennzeichnet, dass** die Position des Gurtführungselements (60) am Kindersitz (20) in der Höhe verstellbar ist.

24. Kindersitz nach einem der voranstehenden Ansprüche 20 bis 23, **dadurch gekennzeichnet, dass** das Gurtführungselement (60) derart am Kindersitz befestigt ist, dass die Öffnung (600) des Aufnahmeschlitzes (130) des Gurtführungselements (60) nach oben ausgerichtet ist.

25. Kindersitz nach einem der voranstehenden Ansprüche 20 bis 24, sofern rückbezogen auf einen der Ansprüche 5 bis 10, 13 bis 15,18 oder 19, **dadurch gekennzeichnet dass** das Gehäuse (120) einen Hakenbereich (620) aufweist, der seitlich oder quer zur Fahrtrichtung angeordnet ist.

## Claims

1. A belt-guiding element for a child-safety system, in particular for a child seat (20),
- having an accommodating slot (130) for accommodating a vehicle-mounted safety belt (40), in particular a vehicle-mounted 3-point belt, and
- having a locking element (100) which can be opened and closed,
- the locking element (100), in its open position, making it possible for the safety belt (40) to be inserted into the accommodating slot (130) or for a previously inserted safety belt (40) to be removed from the accommodating slot (130) and, in its closed end position, preventing the safety belt (40) from being inserted or removed,
- the locking element (100) being formed by a pivotable locking lever which can be pivoted about a pivot pin (110) which is spaced apart from the accommodating slot (130), and
- the accommodating slot (130), at least in certain sections, running in the form of a circle, and the pivot pin (110) of the locking lever (100) forming the center point (M) of the circular path (135) of the accommodating slot (130).

2. The belt-guiding element as claimed in claim 1, **characterized in that**, during opening or closure of the locking lever (100), an end (140) of the locking lever (100) which is directed toward the accommodating slot (130) describes a section of a locking-lever circular path (150) which, at least in certain sections, runs concentrically in relation to the accommodating slot (130).

3. The belt-guiding element as claimed in any of the preceding claims, **characterized in that**, in at least one pivoting position, preferably in each pivoting position, the locking lever (100) is located in each case perpendicularly in relation to an imaginary tangent (160) which is formed over the course (135) of the accommodating slot (130), at that location of the latter which is located closest to the end (140) of the locking lever (100).

4. The belt-guiding element as claimed in any of the preceding claims, **characterized in that** connected to the end (140) of the locking lever (100) which is directed toward the accommodating slot (130) is a positioning member (300), of which the outer contour (310) corresponds to that section of the circular path (150) over which the locking lever (100) passes as it pivots, and which, in the closed end position of the locking lever, restrains the safety belt (40) in the accommodating slot (130).

5. The belt-guiding element as claimed in claim 4, **characterized in that** a housing (120) of the belt-guiding element (60) has an accommodating opening (320) for accommodating the positioning member (300), and **in that** the positioning member (300), in the open position of the locking lever (100), is inserted, at least in part, into this accommodating opening (320).

6. The belt-guiding element as claimed in claim 5, **characterized in that** a covering element (400), in particular a covering plate, is arranged on the locking lever (100) so as to prevent parts of the body from being inserted between the locking lever (100) and the housing (120), which retains the pivot pin (110) of the locking lever (100).

7. The belt-guiding element as claimed in claim 6, **characterized in that** the housing (120) has an accommodating opening (410) for accommodating the covering element (400), in particular, in its entirety, and **in that** the covering element (400), in the open position of the locking lever (100), is inserted, at least in part, into this accommodating opening (410).

8. The belt-guiding element as claimed in claim 6 or 7, **characterized in that** the positioning member (300) and the covering element (400) are integrally connected to the locking lever (100).

9. The belt-guiding element as claimed in any of the claims 6 to 8, **characterized in that** the positioning member (300) and the covering element (400) are separated from one another by a separating slot (500).

10. The belt-guiding element as claimed in claim 9, **characterized in that** the separating slot (500) is dimensioned so as to prevent parts of the body from being inserted into the separating slot.

11. The belt-guiding element as claimed in any of the preceding claims, **characterized in that** a spring element interacts with the locking lever (100) and always subjects the latter to a force in the direction of the closed end position.

12. The belt-guiding element as claimed in any of the preceding claims, **characterized in that** the locking lever (100) is arranged such that, in its open state, it releases at least a fifth, preferably at least a third, of the accommodating slot (130).

13. The belt-guiding element as claimed in any of the claims 5 to 10, **characterized in that** the end (140) of the locking lever (100) is provided with a latching element (200) which interacts with a latching device (210) of the housing (120), which retains the pivot bearing (110), the latching device (210) being configured such that it latches the locking lever (100) in the closed end position of the latter and releases the same only when a predetermined minimum deflecting force has been exceeded.

14. The belt-guiding element as claimed in any of the claims 5 to 10 or 13, **characterized in that** the housing (120) of the belt-guiding element (60), as seen in plan view, is at least more or less in the form of a circle segment, of which the segment-angle size corresponds at least to twice the pivoting angle (α) of the locking lever (100).

15. The belt-guiding element as claimed in any of the preceding claims 5 to 10, 13 or 14, **characterized in that** the housing (120) has a rounded sliding surface (610).

16. The belt-guiding element as claimed in any of the preceding claims, **characterized in that** the pivotable locking lever (100) is pivoted inward for opening purposes.

17. The belt-guiding element as claimed in any of the preceding claims, **characterized in that** the opening (600) of the accommodating slot (130) is oriented upward.

18. The belt-guiding element as claimed in any of the preceding claims 5 to 10 or 13 to 15, **characterized in that** the housing (120) has a hook region (620).

19. The belt-guiding element as claimed in claim 18, **characterized in that** the hook region (620) is formed in a hook-like manner such that the safety belt (40) is held in position even in the event of an accident.

20. A child seat having a belt-guiding element (60) as claimed in any of the preceding claims.

21. The child seat as claimed in claim 20, **characterized in that** the belt-guiding element (60) is fastened on the child seat.

22. The child seat as claimed in claim 21, **characterized in that** the belt-guiding element (60) is arranged at the shoulder height (50) of the child (30) who is to be secured.

23. The child seat as claimed in any of the preceding claims 20 to 22, **characterized in that** the position of the belt-guiding element (60) on the child seat (20) is height-adjustable.

24. The child seat as claimed in any of the preceding claims 20 to 23, **characterized in that** the belt-guiding element (60) is fastened on the child seat such that the opening (600) of the accommodating slot (130) of the belt-guiding element (60) is oriented upward.

25. The child seat as claimed in any of the preceding claims 20 to 24, insofar as they refer back to any of the claims 5 to 10, 13 to 15, 18 or 19, **characterized in that** the housing (120) has a hook region (620) which is arranged laterally or transversely in relation to the direction of travel.

## Revendications

1. Élément de guidage de ceinture pour un système de protection pour enfants, en particulier pour un siège pour enfants (20),
- comprenant une fente de réception (130) pour recevoir une ceinture de sécurité (40) côté du véhicule, en particulier une ceinture de sécurité véhicule du type à trois points, et
- comprenant un élément de fermeture (100) qui peut être ouvert et fermé,
- dans lequel l'élément de fermeture (100) permet, dans sa position ouverte, une introduction de la ceinture de sécurité (40) dans la fente de réception (130) ou un enlèvement d'une ceinture de sécurité (40) auparavant introduite hors de la fente de réception (130) et empêche, dans sa position finale fermée, une introduction ou un enlèvement de la ceinture de sécurité (40),
- dans lequel l'élément de fermeture (100) est formé par un levier de fermeture pivotant qui est capable de pivoter autour d'un axe de pivotement (110) agencé à distance de la fente de réception (130), et
- dans lequel la fente de réception (130) s'étend, au moins par tronçons, sous forme circulaire, et l'axe de pivotement (110) du levier de fermeture (100) forme le centre (M) de la trajectoire circulaire (135) de la fente de réception (130).

2. Élément de guidage de ceinture selon la revendication 1, **caractérisé en ce qu'**une extrémité (140) du levier de fermeture (100), tournée vers la fente de réception (130), décrit lors de l'ouverture ou de la fermeture du levier de fermeture (100) un tronçon d'une trajectoire circulaire (150) pour le levier de fermeture, trajectoire qui s'étend au moins par tronçons concentriquement à la fente de réception (130).

3. Élément de guidage de ceinture selon l'une des revendications précédentes, **caractérisé en ce que** le levier de fermeture (100), dans au moins une position en pivotement et de préférence dans toutes les positions en pivotement, se dresse à chaque fois perpendiculairement à une tangente imaginaire (160) qui est formée à l'emplacement de la fente de réception (130), situé au plus proche de l'extrémité (140) du levier de fermeture (100), le long de son tracé (135).

4. Élément de guidage de ceinture selon l'une des revendications précédentes, **caractérisé en ce qu'**un organe de positionnement (300) est en liaison avec l'extrémité (140), tournée vers la fente de réception (130), du levier de fermeture (100), organe dont le contour extérieur (310) correspond au tronçon de la trajectoire circulaire (150) parcouru par le levier de fermeture (100) lors du pivotement et qui retient, dans la position finale fermée du levier de fermeture, la ceinture de sécurité (40) dans la fente de réception (130).

5. Élément de guidage de ceinture selon la revendication 4, **caractérisé en ce qu'**un boîtier (120) de l'élément de guidage de ceinture (60) comporte une ouverture de réception (320) pour la réception de l'organe de positionnement (300), et **en ce que** l'organe de positionnement (300), dans la position ouverte du levier de fermeture (100) est au moins partiellement introduit dans cette ouverture de réception (320).

6. Élément de guidage de ceinture selon la revendication 5, **caractérisé en ce qu'**un élément de couverture (400), en particulier une plaque de couverture, est agencée sur le levier de fermeture (100) de telle manière qu'une introduction de parties corporelles entre le levier de fermeture (100) et le boîtier (120) qui retient l'axe de pivotement (110) du levier de fermeture (100) est empêchée.

7. Élément de guidage de ceinture selon la revendication 6, **caractérisé en ce que** le boîtier (120) comporte une ouverture de réception (410) pour la réception, en particulier totale, de l'élément de couverture (400), et **en ce que** l'élément de couverture (400), dans la position ouverte du levier de fermeture (100), est introduit au moins partiellement dans cette ouverture de réception (410).

8. Élément de guidage de ceinture selon la revendication 6 ou 7, **caractérisé en ce que** l'organe de positionnement (300) et l'élément de couverture (400) sont reliés d'un seul tenant avec le levier de fermeture (100).

9. Élément de guidage de ceinture selon l'une des revendications 6 à 8, **caractérisé en ce que** l'organe de positionnement (300) et l'élément de couverture (400) sont séparés l'un de l'autre par une fente de séparation (500).

10. Élément de guidage de ceinture selon la revendication 9, **caractérisé en ce que** la fente de séparation (500) a des dimensions telles qu'une introduction de parties corporelles dans la fente de séparation est empêchée.

11. Élément de guidage de ceinture selon l'une des revendications précédentes, **caractérisé en ce qu'**un élément à ressort coopère avec le levier de fermeture (100) et exerce sur celui-ci en permanence une force en direction de la position finale fermée.

12. Élément de guidage de ceinture selon l'une des revendications précédentes, **caractérisé en ce que** le levier de fermeture (100) est agencé de telle manière que, dans sa position ouverte, il dégage au moins un cinquième, de préférence au moins un tiers, de la fente de réception (130).

13. Élément de guidage de ceinture selon l'une des revendications 5 à 10, **caractérisé en ce que** l'extrémité (140) du levier de fermeture (100) est pourvue d'un élément d'enclenchement (200) qui coopère avec un dispositif d'enclenchement (210) du boîtier (120) qui tient le palier de pivotement (110), et le dispositif d'enclenchement (210) est conçu de telle manière qu'il enclenche le levier de fermeture (100) dans sa position finale fermée et le libère uniquement lors du dépassement d'une force de déflexion minimale prédéterminée.

14. Élément de guidage de ceinture selon l'une des revendications 5 à 10 ou 13, **caractérisé en ce que** le boîtier (120) de l'élément de guidage de ceinture (60) présente en élévation au moins approximativement la forme d'un segment de cercle dont la taille angulaire correspond au moins au double de l'angle de pivotement (α) du levier de fermeture (100).

15. Élément de guidage de ceinture selon l'une des revendications 5 à 10, 13 ou 14, **caractérisé en ce que** le boîtier (120) présente une surface de coulissement arrondie (610).

16. Élément de guidage de ceinture selon l'une des revendications précédentes, **caractérisé en ce que** le levier de fermeture pivotant (100) est pivoté vers l'intérieur pour l'ouverture.

17. Élément de guidage de ceinture selon l'une des revendications précédentes, **caractérisé en ce que** l'ouverture (600) de la fente de réception (130) est orientée vers le haut.

18. Élément de guidage de ceinture selon l'une des revendications 5 à 10 ou 13 à 15, **caractérisé en ce que** le boîtier (120) présente une zone en crochet (620).

19. Élément de guidage de ceinture selon la revendication 18, **caractérisé en ce que** la zone en crochet (620) est conformée à la manière d'un crochet de telle façon que la ceinture de sécurité (40) est maintenue en position également en cas d'accident.

20. Siège pour enfant comprenant un élément de guidage de ceinture (60) selon l'une des revendications précédentes.

21. Siège pour enfant selon la revendication 20, **caractérisé en ce que** l'élément de guidage de ceinture (60) est fixé au siège pour enfant.

22. Siège pour enfant selon la revendication 21, **caractérisé en ce que** l'élément de guidage de ceinture (60) est agencé à hauteur d'épaule (50) de l'enfant à protéger (30).

23. Siège pour enfant selon l'une des revendications 20 à 22, **caractérisé en ce que** la position de l'élément de guidage de ceinture (60) sur le siège pour enfant (20) est réglable en hauteur.

24. Siège pour enfant selon l'une des revendications 20 à 23, **caractérisé en ce que** l'élément de guidage de ceinture (60) est fixé sur le siège pour enfant de telle manière que l'ouverture (600) de la fente de réception (130) de l'élément de guidage de ceinture (60) est orientée vers le haut.

25. Siège pour enfant selon l'une des revendications 20 à 24, prise en dépendance de l'une des revendications 5 à 10, 13 à 15, 18 ou 19, **caractérisé en ce que** le boîtier (120) présente une zone en crochet (620) qui est agencé latéralement ou perpendiculairement à la direction de circulation.
